# NOUVEAU FASCICULE DE BREVET EUROPEEN

(11) **EP 0 422 476 B2**
(45) Date de publication et mention de la décision concernant l'opposition: **22.12.1999**
(45) Mention de la délivrance du brevet: 14.04.1993
(21) Numéro de dépôt: 90118796.3
(22) Date de dépôt: 01.10.1990
(51) Int. Cl.: A23L 1/231, A23L 1/311, A23L 1/318

(54) **Procédé de préparation d'une viande aromatisée**
Verfahren zur Bereitung von aromatisiertem Fleisch
Method of preparing flavored meat

(30) Priorité: 12.10.1989 CH 371089
(43) Date de publication de la demande: 17.04.1991
(73) Titulaire: SOCIETE DES PRODUITS NESTLE S.A., 1800 Vevey (CH)
(72) Inventeur: Cornet, Paul-Emile, CH-1807 Blonay (CH); Heyland, Sven, CH-8534 Weiningen (CH)

(56) Documents cités:
- EP-A- 0 087 769
- EP-A- 0 288 405
- EP-A- 0 313 895
- BE-A- 659 256
- DE-A- 3 206 587
- GB-A- 185 110
- US-A- 3 930 046
- US-A- 4 076 852
- US-A- 4 081 565
- The quality of foods and beverages, Chemistry and technology, vol. 2, ed. by G. Charalambous et al, Academic Press 1981, pp. 283, 298, 299

## Description

La présente invention a pour objet un procédé de préparation d'une viande aromatisée.

Il est connu d'incorporer des agents aromatisants dans une viande reconstituée. De tels agents aromatisants peuvent être préparés, par exemple comme le montre le brevet DE 217980, à partir d'un hydrolysat d'os broyés auquel on peut faire subir une réaction de Maillard. Toutefois, il est nécessaire d'incorporer à la viande des quantités relativement importantes d'agent aromatisant pour obtenir un goût de viande prononcé.

US4081565 et US4076852 concement chacun un agent aromatisant capable de conférer le goût de la viande à un aliment auquel on l'ajoute. L'agent aromatisant de US4081565 est le produit de la réaction par traitement thermique d'un mélange d'un hydrolysat enzymatique de viande, de composés soufrés, d'acides aminés et de monosaccharides. L'agent aromatisant de US4076852 est le produit de la réaction par traitement thermique d'un mélange d'oeuf, d'une poudre de viande ou d'un hydrolysat enzymatique de viande, de composés soufrés, d'acides aminés et de monosaccharides.

DE3206587 concerne également un agent aromatisant capable de conférer le goût de la viande à un aliment auquel on l'ajoute. L'agent aromatisant de DE3206587 est le produit de la réaction par traitement thermique d'un mélange d'un extrait de viande, d'acides aminés, de renforçateurs d'arôme, d'hydrolysat de protéine, de sucre et de graisse animale.

EP0313895 décrit un procédé de préparation d'une viande marinée consistant à mettre en contact la surface de la viande avec une marinade contenant entre autres des agents aromatisants et/ou des précurseurs d'arôme pour l'imprégner de cette marinade, et à cuire la viande ainsi imprégnée.

La présente invention a pour but de proposer un procédé de préparation d'une viande aromatisée possédant de bonnes qualités organoleptiques et présentant un goût de visande caractéristique, sans emploi de grandes quantités d'agent aromatisant.

A cet effet, le procédé selon la présente invention est caractérisé par le fait que l'on cuit une viande, on en sépare après cuisson le jus et la graisse, on concentre le jus obtenu de manière à obtenir un taux de matière sèche compris entre 35 et 45% en poids prépare un mélange comprenant 100 parties en poids de jus concentré, 4 à 14 parties en poids de sucre réducteur et 12 à 35 parties en poids d' au moins une substance contenant du soufre, on fait réagir partiellement le mélange par traitement thermique, on ajoute la viande cuite au mélange traité thermiquement et l'on sèche le produit obtenu à 80-98°C, sous une pression de 10 à 50 mbar, pendant 3 à 10 heures.

Un avantage de ce procédé est de permettre l'obtention d'un produit déshydraté qui présente à la fois de bonnes qualités organoleptiques, à savoir un goût de viande caractéristique, et de bonnes qualités de conservation. Un autre avantage de ce procédé est d'être simple et économique dans sa mise en oeuvre et d'être applicable à diverses sortes de viande.

Le présent procédé de préparation peut être mis en oeuvre en semi-continu ou, de préférence, en continu.

La présente invention est particulièrement remarquable par le fait que la réaction est effectuée en 2 étapes. En effet, la réaction débute lors du traitement thermique, entre le jus de viande, le sucre réducteur et la substance contenant du soufre, et la réaction partielle est achevée lors du séchage de la viande aromatisée. Le présent procédé permet donc d'obtenir, d'une part un développement correct des arômes à partir du mélange initial, d'autre part une bonne pénétration desdits arômes dans la viande et une bonne fixation de ces arômes sur les fibres de ladite viande.

Pour mettre en oeuvre le présent procédé, on cuit une viande.
On peut utiliser tout type de viande, par exemple une viande de boeuf ou de volaille.
La viande peut, préalablement à la cuisson, avoir été débarrassée de tout ou partie de ses os et de sa peau. La viande peut aussi avoir été découpée, par exemple en morceaux de 1 à 10 kg, afin de permettre une cuisson plus rapide.
On peut cuire la viande pendant 40 à 120 minutes, à une température de 95-140°C, sous une pression de 1,3-1,8 bars.
Dans une forme particulière d'exécution du présent procédé, on cuit une viande de volaille pendant 40-60 minutes ou une viande de boeuf pendant 90-110 minutes, à une température de 120-125°C et sous une pression de 1,6-1,7 bars.
On peut ajouter à la viande, avant cuisson, de l'eau, de l'acide citrique et une composition antioxydante. Cette dernière peut se présenter, par exemple, sous forme d'une composition contenant, en % en poids, 1,5 à 2% d'antioxydant tel que, par exemple, le propylène glycol, le gallate de propyle ou d'octyle, le butylhydroxyanisol ou un mélange d'entre eux, 7,5 à 8% de graisse de volaille et 90-91% de jus de viande concentré présentant un taux de matière sèche de 38-40%.
Dans une forme d'exécution particulière du présent procédé, on ajoute avant cuisson à 100 parties en poids de viande de volaille, 15-20 parties en poids d'eau, 0,01 à 0,03 parties en poids d'acide citrique et 0,02 à 0,05 parties en poids de ladite composition antioxydante. Dans une autre forme d'exécution particulière du présent procédé, on ajoute avant cuisson, à 100 parties en poids de viande de boeuf, 20 à 25 parties en poids d'eau, 0,01 à 0,02 parties en poids d'acide citrique et 0,05 à 0,08 partiel en poids de ladite composition antioxydante.

On obtient, après cuisson, une viande cuite que l'on sépare, par exemple par égouttage, de son jus de cuisson et de la graisse qu'il contient.
La viande cuite peut alors être totalement désossée et coupée en morceaux de petite taille.
Le jus de cuisson peut être séparé de la graisse, par exemple par décantation.
Le jus de cuisson est concentré, par exemple par évaporation sous pression réduite, de manière à atteindre un taux de matière sèche compris entre environ 35 et 45% en poids, de préférence 38-42%. On peut, par exemple, concentrer le jus par évaporation à 48-50°C, sous une pression de l'ordre de 20-30 mbar, pendant 30 à 40 minutes.

Selon le présent procédé objet de l'invention, on prépare un mélange comprenant 100 parties en poids de jus concentré, 4 à 14 parties en poids de sucre réducteur et 12 à 35 parties en poids d'au moins une substance contenant du soufre.

Le sucre réducteur peut être, par exemple, un monosaccharide et notamment un pentose tel que le xylose ou un hexose tel que le glucose ou le fructose, ou un mélange de différents sucres réducteurs.
On peut utiliser, par exemple, un mélange comprenant, pour un jus de viande de volaille, 8 à 10 parties en poids de xylose et 0 à 2 parties en poids de glucose, et pour une viande de boeuf, 5 à 7 parties en poids de xylose et 0 à 2 parties en poids de glucose.

La substance contenant du soufre peut être, par exemple, la cystéine, la cystine, la méthionine ou la thiamine ou un mélange de différentes substances contenant du soufre.
On peut utiliser, par exemple, un mélange comprenant 8 à 23 parties en poids de cystéïne et 4 à 12 parties en poids de thiamine.
Dans une forme particulière d'exécution, on peut utiliser, pour un jus de viande de volaille, un mélange comprenant 15 à 20 parties en poids de cystéïne et 7 à 10 parties en poids de thiamine, et pour un jus de viande de boeuf, 8 à 12 parties en poids de cystéïne et 5 à 7 parties en poids de thiamine.

Le mélange peut comprendre, en outre, 0 à 35 parties en poids de glutamate de sodium, 0 à 8 parties en poids d'inosine monophosphate et 0 à 25 parties en poids de chlorure de sodium.
On peut ajouter au mélange tout ou partie de la graisse produite lors de la cuisson de la viande.
On peut ajouter, par exemple, 0 à 80 parties en poids de graisse, pour 100 parties en poids de jus concentré.

Le mélange peut être travaillé, par exemple pendant 10 à 15 minutes avec un agitateur tournant à 100-120 tours par minute, afin de lui conférer une texture pâteuse homogène.

On peut faire réagir partiellement le mélange par traitement thermique à une température comprise entre 90 et 100°C, et de préférence à 95-97°C pendant 30 à 240 minutes.

La réaction partielle peut être effectuée par exemple dans une cuve à double manteau dans lequel on peut injecter de la vapeur de manière à chauffer le mélange à 90-100°C, pendant 5 à 25 minutes, puis on peut laisser le mélange réagir pendant 25 à 215 minutes à 95-97°C, sous une pression de 1 à 2 bar.
La réaction partielle peut être effectuée sous reflux, ce qui permet d'éviter l'évaporation de l'eau contenue dans le mélange.
Le mélange peut être travaillé, par exemple avec un agitateur tournant à 80-100 tours par minute pendant tout ou partie du traitement thermique, de manière à homogénéiser sa texture et à assurer des transferts de chaleur corrects, donc une réaction uniforme, dans toute sa masse.

Après cette réaction partielle, on peut refroidir le mélange rapidement, par exemple en faisant circuler de l'eau froide dans le double manteau, de manière à stopper la réaction et à obtenir un mélange traité présentant une température de 40-50°C après 10-20 minutes.

On ajoute ensuite le mélange traité à la viande cuite, désossée et coupée en petits morceaux, afin d'obtenir la viande aromatisée à sécher.
On peut également ajouter à cette viande des additifs tels que du sel, du blanc d'oeuf ou une composition antioxydante.
Dans une forme d'exécution particulière du présent procédé, on prépare une viande aromatisée à sécher comprenant 100 parties en poids d'une viande cuite de volaille, 8 à 25 parties en poids de mélange traité, 5 à 10 parties en poids de chlorure de sodium, 0 à 3 parties en poids de blanc d'oeuf et 0 à 2 parties en poids de composition antioxydante.

Dans une autre forme d'exécution particulière, on prépare une viande aromatisée à sécher comprenant, en parties en poids, 100 parties d'une viande cuite de boeuf, 10 à 25 parties de mélange traité, 4 à 10 parties de chlorure de sodium, 0 à 5 parties de blanc d'oeuf et 0 à 2 parties de composition antioxydante.
On peut travailler la viande aromatisée obtenue avec un agitateur de manière à obtenir un produit homogène.

La viande aromatisée est ensuite séchée, par exemple dans un four sous pression réduite, à une température de 80 à 98°C, sous une pression de 10 à 50 mbar et pendant 3 à 10 heures.
La réaction partielle est donc achevée lors de cette étape de séchage.

La viande aromatisée séchée peut alors être découpée en granulés présentant une taille de l'ordre de 3 à 6 mm pour la viande de volaille et 5 à 10 mm pour la viande de boeuf, par exemple.

On obtient alors une viande aromatisée déshydratée possédant un goût caractéristique de viande de volaille ou de boeuf, par exemple, pouvant se conserver pendant de longues périodes et au moins pendant 9 mois.
Cette viande peut présenter un taux de matière sèche de 97-99% en poids, un taux de sel de 13-16% en poids et un taux de graisse de 27-35% en poids, par exemple.

La présente invention est illustrée plus en détail dans les exemples ci-après.

### Exemple 1

On prépare une composition antioxydante comprenant 1,320 kg de propylène glycol, 0,4 kg de butylhydroxyanisol, 0,2 kg de gallate de propyle, 0,08 kg d'acide citrique, 8 kg de graisse de volaille et 90 kg de jus de viande concentré à 40% en poids de matière sèche.

On dispose dans un autoclave 100 kg de viande de boeuf désossée se présentant sous forme de morceaux de 25 kg chacun, 20 litres d'eau, 10 g d'acide citrique et 50 g de composition antioxydante.
On cuit la viande pendant 100 minutes, à une température de l'ordre de 120°C, sous une pression de 1,7 bar.

Après cuisson, on sépare la viande cuite du jus et de la graisse par égouttage.
On obtient 30 kg de jus à 8,5% en poids de matière sèche, 58,3 kg de viande cuite et 11,3 kg de graisse.

La viande cuite est découpée en petits morceaux et réservée.
On concentre le jus dans un évaporateur à 48°C, sous une pression de 25 mbar, pendant environ 30 minutes, de manière à obtenir 6,1 kg de jus concentré présentant un taux de matière sèche de 40% en poids.

On prépare ensuite dans une cuve à double manteau un mélange comprenant 4,3 kg de jus concentré, 0,49 kg de cystéine, 0,25 kg de thiamine, 0,24 kg de xylose, 0,15 kg d'inosine monophosphate, 0,68 kg de glutamate de sodium et 1,0 kg de chlorure de sodium.
Le mélange est d'abord travaillé pendant 10 minutes avec un agitateur tournant à 100 tours par minute puis, sans cesser l'agitation, on chauffe le mélange par envoi de vapeur dans le double manteau.
Il faut environ 12 minutes pour parvenir à une température de 95-96°C au sein du mélange.
On laisse réagir le mélange à cette température pendant 27 minutes, avant de le refroidir à une température de 45°C.
On obtient alors 7,1 kg de mélange traité thermiquement.

On prépare ensuite une viande aromatisée à sécher comprenant 50 kg de viande de boeuf cuite, 7,1 kg de mélange traité, 2,8 kg de chlorure de sodium, 1,5 kg de blanc d'oeuf et 0,3 kg de composition antioxydante.
La viande est travaillée pendant 20 minutes avec un agitateur tournant à 50 tours par minute afin d'obtenir un produit homogène.

La viande aromatisée est ensuite séchée dans un four sous pression réduite, à environ 90°C, sous 10 mbar pendant 6 heures, jusqu'à un taux de matière sèche de environ 98% en poids.
La viande aromatisée séchée est alors découpée en granulés présentant une taille de l'ordre de 8mm.
On obtient alors 34,3 kg de viande aromatisée déshydratée présentant un goût caractéristique de viande de boeuf et se présentant sous forme de granulés d'environ 8 mm, contenant 14% en poids de NaCl et 27,5% en poids de graisse.

### Exemple 2

On dispose dans un autoclave 150 kg de viande de volaille se présentant sous forme de poulets entiers pesant environ 1 kg chacun, 25 litres d'eau, 15 g d'acide citrique et 30 g de composition antioxydante telle que préparée à l'exemple 1.

On cuit la viande pendant 40 minutes, à une température de l'ordre de 120°C, sous une pression de 1,7 bar.

Après cuisson, on sépare la viande cuite du jus et de la graisse, on désosse totalement la viande et on la coupe en petits morceaux.
On obtient 37,8 kg de jus à 3,5% en poids de matière sèche, 68,5 kg de viande désossée, 13 kg d'os et 11 kg de graisse.

On concentre le jus dans un évaporateur à 48°C et sous une pression de 25 mbar pendant environ 45 minutes, de manière à obtenir 3,3 kg de jus concentré présentant un taux de matière sèche de 40% en poids.
On prépare ensuite un mélange comprenant 2,4 kg de jus concentré, 1,3 kg de graisse, 0,48 kg de cystéine, 0,24 kg de thiamine, 0,24 kg de xylose, 0,15 kg d'inosine monophosphate et 0,67 kg de glutamate de sodium.

Le mélange est travaillé 10 minutes à 100 tours par minute, puis chauffé à 97-99°C tout en maintenant l'agitation.
Il faut environ 12 minutes pour atteindre une température de 96°C au sein du mélange.
On laisse ensuite le mélange réagir pendant 27 minutes à cette température, puis on le refroidit jusqu'à 45°C.
On obtient alors 5,4 kg de mélange traité thermiquement.

On prépare une viande aromatisée à sécher comprenant 50 kg de viande de volaille cuite et découpée, 5,4 kg de mélange traité, 4,0 kg de chlorure de sodium, 0,5 kg de blanc d'oeuf et 0,3 kg de composition antioxydante. On travaille la viande obtenue à 50 tours par minute pendant 20 minutes, puis on la sèche pendant 4 1/2 heures, à 90°C et sous une pression de 10 mbar de manière à atteindre un taux de matière sèche de 98-98,5% en poids.

La viande aromatisée est ensuite découpée en granulés d'une taille d'environ 3 mm.
On obtient alors 31,1 kg de viande aromatisée déshydratée possédant un goût caractéristique de viande de volaille et contenant 15,7% en poids de NaCl et 34,3% en poids de graisse.

## Revendications

1. Procédé de préparation d'une viande aromatisée, comprenant le fait que l'on cuit une viande, on en sépare après cuisson le jus et la graisse, on concentre le jus séparé de manière à obtenir un taux de matière sèche compris entre 35 et 45% en poids, on prépare un mélange comprenant, en parties en poids, 100 parties de jus concentreé, 4 à 14 parties de sucre réducteur et 12 à 35 parties d'au moins une substance contenant du soufre, on fait réagir partiellement le mélange par traitement thermique, an ajoute le mélange traité thermiquement à la viande cuite et l'on sèche le produit obtenu à 80-98°C, sous une pression de 10 à 50 mbar, pendant 3 à 10 heures.

2. Procédé selon la revendication 1, caractérisé par le fait que la viande est cuite pendant 40 à 120 minutes, à une température 4e 95 à 140°C, sous une pression de 1,3 à 1,8 bar.

3. Procédé selon la revendication 1, caractérisé par le fait que l'an ajoute, avant cuisson, pour 100 parties en poids de viande, 15 à 25 parties en poids d'eau, 0,01 à 0,03 parties en poids d'acide citrique et 0,02 à 0,08 parties en poids d'une composition antioxydante.

4. Procédé selon la revendication 1, caractérisé par le fait que le sucre réducteur est le xylose et que la substance contenant du soufre est constituée par un mélange de 8 à 23 parties en poids de cystéïne et 4 à 12 parties en poids de thiamine.

5. Procédé selon la revendication 1, caractérisé par le fait que le mélange comprend en outre, en parties en poids, 0 à 35 parties de glutamate de sodium, 0 à 8 parties d'inosine monophosphate, 0 à 25 parties de chlorure de sodium et 0 à 80 parties de graisse, pour 100 parties en poids de jus concentré.

6. Procédé selon la revendication 1, caractérisé par le fait que le mélange est traité thermiquement à une température comprise entre 90 et 100°C, pendant 30 à 240 minutes.

7. Procédé selon la revendication 1, caractérisé par le fait qu'à 100 parties en poids d'une viande cuite de volaille, on ajoute 8 à 25 parties en poids de mélange traité thermiquement, 5 à 10 parties en poids de chlorure de sodium, 0 à 3 parties en poids de blanc d'oeuf et 0 à 2 parties en poids de composition antioxydante.

8. Procédé selon la revendication 1, caractérisé par le fait qu'à 100 parties en poids d'une viande cuite de boeuf, on ajoute 10 à 25 parties en poids de mélange traité thermiquement, 4 à 10 parties en poids de chlorure de sodium, 0 à 5 parties en poids de blanc d'oeuf et 0 à 2 parties en poids de composition antioxydante.

9. Procédé selon la revendication 1, caractérisé par le fait que la viande aromatisée est séchée jusqu'à un taux de matière sèche de 97-99% en poids.

## Claims

1. Process for preparing a flavoured meat, comprising the fact that meat is cooked, the juice and fats are separated therefrom after cooking, the separated juice is concentrated so as to obtain a dry matter content of between 35 and 45 % by weight, a mixture is prepared comprising, in parts by weight, 100 parts of concentrated juice, 4 to 14 parts of reducing sugar and 12 to 35 parts of at least one sulfur-containing substance, the mixture is partially reacted by heat treatment, the heat-treated mixture is added to the cooked meat and the product obtained is dried at 80-98°C under a pressure of 10 to 50 mbar for 3 to 10 hours.

2. Process according to claim 1, characterized in that the meat is cooked for 40 to 120 minutes, at a temperature of 95 to 140°C, under a pressure of 1.3 to 1.8 bar.

3. Process according to claim 1, characterized in that, before cooking, 15 to 25 parts by weight of water, 0.01 to 0.03 parts by weight of citric acid and 0.02 to 0.08 parts by weight of an antioxidant composition are added per 100 parts by weight of meat.

4. Process according to claim 1, characterized in that the reducing sugar is xylose and the sulfur-containing substance consists of a mixture of 8 to 23 parts by weight of cysteine and 4 to 12 parts by weight of thiamine.

5. Process according to claim 1, characterized in that the mixture additionally contains, in parts by weight, 0 to 35 parts of sodium glutamate, 0 to 8 parts of inosine monophosphate, 0 to 25 parts of sodium chloride and 0 to 80 parts of fats per 100 parts by weight of concentrated juice.

6. Process according to claim 1, characterized in that the mixture is heat treated to a temperature of between 90 and 100°C, for 30 to 240 minutes.

7. Process according to claim 1, characterized in that 8 to 25 parts by weight of the heat-treated mixture, 5 to 10 parts by weight of sodium chloride, 0 to 3 parts by weight of egg white and 0 to 2 parts by weight of antioxidant composition are added to 100 parts by weight of cooked chicken.

8. Process according to claim 1, characterized in that 10 to 25 parts by weight of the heat-treated mixture, 4 to 10 parts by weight of sodium chloride, 0 to 5 parts by weight of egg white and 0 to 2 parts by weight of antioxidant composition are added to 100 parts by weight of cooked beef.

9. Process according to claim 1, characterized in that the flavoured meat is dried to a dry matter content of 97-99 % by weight.

## Patentansprüche

1. Verfahren zur Herstellung eines aromatisierten Fleisches, das darin besteht, daß man ein Fleisch gart, nach dem Garen den Saft und das Fett von ihm abtrennt, den abgetrennten Saft so konzentriert, daß man einen Trockensubstanzgehalt von 35 bis 45 Gewichtsprozent erhält, ein Gemisch herstellt, das in Gewichtsteilen aus 100 Teilen konzentriertem Saft, 4 bis 14 Teilen reduzierendem Zucker und 12 bis 35 Teilen wenigstens einer schwefelhaltigen Substanz besteht, das Gemisch durch Wärmebehandlung teilweise reagieren läßt, das wärmebehandelte Gemisch dem gegarten Fleisch beigibt und das erhaltene Produkt 3 bis 10 Stunden lang bei 80 bis 98°C unter einem Druck von 10 bis 50 mbar trocknet.

2. Verfahren nach Anspruch 1, dadurch gekennzeichnet, daß das Fleisch 40 bis 120 Minuten lang bei einer Temperatur von 95 bis 140°C unter einem Druck von 1,3 bis 1,8 bar gegart wird.

3. Verfahren nach Anspruch 1, dadurch gekennzeichnet, daß man vor dem Garen auf 100 Gewichtsteilen Fleisch 15 bis 25 Gewichtsteile Wasser, 0,01 bis 0,03 Gewichtsteile Zitronensäure und 0,02 bis 0,08 Gewichtsteile einer oxidationshemmenden Zusammensetzung beigibt.

4. Verfahren nach Anspruch 1, dadurch gekennzeichnet, daß der reduzierende Zucker Xylose ist und daß die schwefelhaltige Substanz aus einem Gemisch von 8 bis 23 Gewichtsteilen Cystein und 4 bis 12 Gewichtsteilen Thiamin besteht.

5. Verfahren nach Anspruch 1, dadurch gekennzeichnet, daß das Gemisch außerdem in Gewichtsteilen 0 bis 35 Teile Natriumglutamat, 0 bis 8 Teile Inosinmonophosphat, 0 bis 25 Teile Natriumchlorid und 0 bis 80 Teile Fett auf 100 Gewichtsteilen konzentriertem Saft enthält.

6. Verfahren nach Anspruch 1, dadurch gekennzeichnet, daß das Gemisch 30 bis 240 Minuten lang bei einer Temperatur von 90 bis 100°C wärmebehandelt wird.

7. Verfahren nach Anspruch 1, dadurch gekennzeichnet, daß 100 Gewichtsteilen gegartem Geflügelfleisch 8 bis 25 Gewichtsteile wärmebehandeltes Gemisch, 5 bis 10 Gewichtsteile Natriumchlorid, 0 bis 3 Gewichtsteile Eiweiß und 0 bis 2 Gewichtsteile oxidationshemmende Zusammensetzung beigegeben wird.

8. Verfahren nach Anspruch 1, dadurch gekennzeichnet, daß 100 Gewichtsteilen gegartem Rindfleisch 10 bis 25 Gewichtsteile wärmebehandeltes Gemisch, 4 bis 10 Gewichtsteile Natriumchlorid, 0 bis 5 Gewichtsteile Eiweiß und 0 bis 2 Gewichtsteile oxidationshemmende Zusammensetzung beigegeben wird.

9. Verfahren nach Anspruch 1, dadurch gekennzeichnet, daß das aromatisierte Fleisch bis zu einem Trockensubstanzgehalt von 97 bis 99 Gewichtsprozent getrocknet wird.
